(19) Europäisches Patentamt
European Patent Office
Office européen des brevets

(11) **EP 3 314 742 B1**

(12) **FASCICULE DE BREVET EUROPEEN**

(45) Date de publication et mention
de la délivrance du brevet:
**05.08.2020 Bulletin 2020/32**

(21) Numéro de dépôt: **16741074.5**

(22) Date de dépôt: **13.06.2016**

(51) Int Cl.:
*H02P 21/13* (2006.01)    *H02P 21/14* (2016.01)

(86) Numéro de dépôt international:
**PCT/FR2016/051418**

(87) Numéro de publication internationale:
**WO 2016/207510 (29.12.2016 Gazette 2016/52)**

(54) **COMMANDE D'UNE MACHINE ÉLECTRIQUE SYNCHRONE À ROTOR BOBINÉ**

STEUERUNG EINER ELEKTRISCHEN SYNCHRONMASCHINE MIT EINEM GEWICKELTEN ROTOR

CONTROL OF A SYNCHRONOUS ELECTRIC MACHINE WITH A WOUND ROTOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.06.2015 FR 1555793**

(43) Date de publication de la demande:
**02.05.2018 Bulletin 2018/18**

(73) Titulaire: **Renault S.A.S.**
**92100 Boulogne-Billancourt (FR)**

(72) Inventeurs:
• **KOTEICH, Mohamad**
**91440 Bures-sur-Yvette (FR)**
• **MALOUM, Abdelmalek**
**94550 Chevilly-Larue (FR)**

(56) Documents cités:
**EP-A2- 2 099 125       US-A1- 2003 094 917**
**US-A1- 2005 007 044    US-A1- 2006 125 439**

• YING L ET AL: "A novel estimation of phase currents from DC link for permanent magnet AC motors", TENCON 2001. PROCEEDINGS OF IEEE REGION 10 INTERNATIONAL CONFERENCE ON ELCTRICAL AND ELECTRONIC TECHNOLOGY. SINGAPORE, AUG. 19 - 22, 2001; [IEEE REGION 10 ANNUAL CONFERENCE], NEW YORK , NY : IEEE, US, vol. 2, 19 août 2001 (2001-08-19), pages 606-612, XP010556319, DOI: 10.1109/TENCON.2001.949666 ISBN: 978-0-7803-7101-9

## Description

L'invention a pour domaine technique la commande de machines électriques et plus particulièrement la commande de machines électriques synchrones à rotor bobiné (MSRB).

Les MSRB sont généralement utilisées comme une alternative aux machines électriques synchrones à aimants permanents (MSAP), en particulier dans des domaines d'application tels que les centrales de production d'énergie électrique et les alternateurs pour véhicules automobiles. Jusque récemment, les MSRB ont été peu utilisées dans des domaines d'applications nécessitant des performances dynamiques élevées, comme la propulsion des véhicules automobiles électriques et hybrides, de sorte que la commande de telles machines pour une utilisation dans le domaine automobile peut être significativement améliorée.

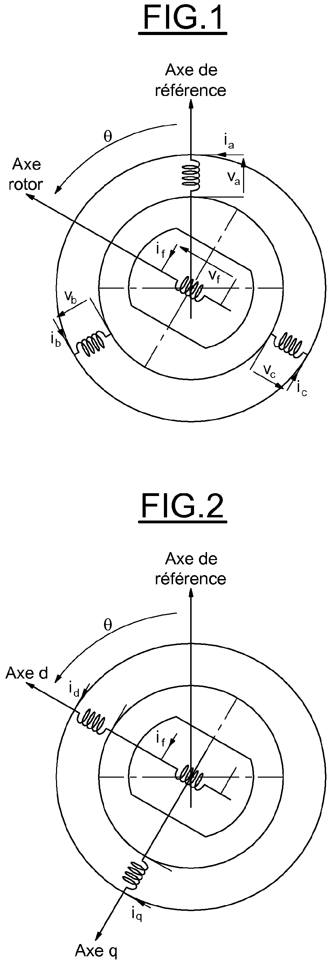

Une MSRB comprend deux parties illustrées par la figure 1, un stator triphasé et un rotor bobiné.

Le stator triphasé (phases a, b et c) est construit de façon à générer un champ magnétique tournant.

Le rotor bobiné comporte un bobinage alimenté par un courant continu (phase f). L'amplitude du champ, créé dans l'entrefer, est variable et réglable à travers le courant circulant dans le bobinage du rotor. La bobine rotorique est un électro-aimant qui cherche à s'aligner avec le champ magnétique tournant produit par le stator. Le rotor tourne à la même fréquence que les courants statoriques, ce qui est à l'origine de l'appellation machine « synchrone ».

Les inductances statoriques propres et mutuelles dépendent de la position θ du rotor non cylindrique (dit à « pôles saillants »). La commande de la machine se fait dans un repère diphasé lié au rotor, par exemple le repère de Park. Le repère de Park est la transformée du repère statorique fixe par la transformation de rotation, ce qui nécessite la connaissance de la valeur de l'angle rotorique θ. La matrice de transformation de Park qui transforme les grandeurs triphasées (a, b, c) en grandeurs continues (d, q, 0) est la suivante. Il est à noter que les composantes homopolaires (0) seront négligées dans la suite car le système triphasé est équilibré.

$$P(\theta) = \begin{bmatrix} \cos\theta & \cos\left(\theta - \dfrac{2\pi}{3}\right) & \cos\left(\theta + \dfrac{2\pi}{3}\right) \\ -\sin\theta & -\sin\left(\theta - \dfrac{2\pi}{3}\right) & -\sin\left(\theta + \dfrac{2\pi}{3}\right) \\ \dfrac{\sqrt{2}}{2} & \dfrac{\sqrt{2}}{2} & \dfrac{\sqrt{2}}{2} \end{bmatrix} \qquad (\text{Eq. 1})$$

Le schéma équivalent de la machine électrique dans le repère de Park est illustré par la figure 2.

La commande avancée des MSRB nécessite une bonne connaissance de ses paramètres de fonctionnement, c'est-à-dire de la position (θ) du rotor de la machine, des tensions ($V_d$, $V_q$) aux bornes des phases du stator dans le repère de Park, de la tension ($V_f$) aux bornes du bobinage du rotor, des intensités ($I_d$, $I_q$) des phases du stator dans le repère de Park et de l'intensité ($I_f$) traversant le bobinage du rotor. On emploie généralement pour cela :

- un capteur de position branché sur l'arbre de sortie de la machine électrique,
- trois capteurs d'intensité branchés respectivement sur les trois phases a, b et c, mesurant respectivement les intensités $I_a$, $I_b$, $I_c$,
- un capteur d'intensité branché sur le bobinage du rotor,
- trois capteurs de tension branchés respectivement sur les trois phases a, b et c, mesurant respectivement les tensions $V_a$, $V_b$, $V_c$,
- un capteur de tension branché sur le bobinage du rotor, et
- un calculateur apte à calculer les intensités $I_d$ et $I_q$ et les tensions $V_d$ et $V_q$ à partir des intensités $I_a$, $I_b$, $I_c$ et des tensions $V_a$, $V_b$, $V_c$ grâce à la matrice de transformation de Park.

Les paramètres mesurés θ, $I_d$, $I_q$, $I_f$, $V_d$, $V_q$, $V_f$ sont envoyés au contrôleur qui pilote la machine électrique.

En outre, on ajoute parfois un capteur apte à mesurer le couple résistant $C_r$ s'appliquant sur l'arbre du rotor, pour permettre un contrôle plus robuste de la MSRB.

La multiplication de capteurs mécaniques pour connaitre les paramètres de fonctionnement de la MSRB présente toutefois de multiples inconvénients, en termes de coût, d'encombrement et de fiabilité du dispositif de commande.

Le document US20030094917 décrit un système de contrôle d'une machine électrique synchrone pour véhicule électrique, comprenant un estimateur de flux en fonction de valeurs de courant, nécessitant un capteur du courant redressé de la charge de la machine.

Le document EP2099125 décrit un dispositif de contrôle d'une machine électrique synchrone à aimants permanents à pôles lisses, comportant un estimateur de courants des phases du stator à partir de mesures de la vitesse et de la position du rotor, ainsi que de la valeur de la tension d'entrée de l'onduleur.

Le document US20050007044 décrit un procédé de commande d'une machine électrique synchrone à aimants permanents, utilisant un filtre de Kalman étendu pour estimer la position et la vitesse du rotor.

Le document US20060125439 décrit une unité d'entraînement comportant un moteur synchrone à aimant permanent et un moyen de correction de la position du rotor. Cette unité utilise un filtre de Kalman pour quantifier une erreur de position estimée.

Au vu de ce qui précède, l'invention a pour but de permettre d'améliorer la fiabilité et la robustesse de la commande d'une MSRB, tout en limitant le nombre de capteurs utilisés, qu'ils soient des capteurs mécaniques ou électriques.

A cet effet, un dispositif de commande d'une machine électrique triphasée synchrone à rotor bobiné pour véhicule automobile électrique ou véhicule hybride électrique, comprend un module de réception des tensions aux bornes des phases du stator et/ou du bobinage du rotor, un module de mesure du courant traversant le bobinage du rotor, un module de récupération de la vitesse de rotation du rotor par rapport au stator et un estimateur du comportement des paramètres de fonctionnement de la machine électrique synchrone à rotor bobiné. L'estimateur est combiné à l'utilisation d'un observateur d'état. Le dispositif de commande comprend des moyens pour recueillir des valeurs de référence des intensités traversant les phases du stator dans un repère diphasé lié au rotor, ledit estimateur étant apte à estimer les intensités traversant les phases du stator dans le repère diphasé lié au rotor et le couple résistant appliqué au rotor en fonction des grandeurs déterminées par les modules de réception, de mesure et de récupération et de valeurs de référence des intensités traversant les phases du stator dans un repère diphasé lié au rotor.

Pour recevoir les tensions aux bornes des phases du stator, le module de réception peut comprendre des moyens matériels et logiciels pour recevoir de l'ordinateur de bord qui pilote la machine électrique les tensions aux bornes des phases du stator dans un repère diphasé lié au rotor. Alternativement, le module de réception comprend des capteurs de tension capables de mesurer les tensions aux bornes des phases du stator dans un repère triphasé lié au stator et le dispositif de commande comprend un calculateur capable d'exprimer les tensions aux bornes des phases du stator dans un repère diphasé lié au rotor.

Le module de mesure peut en outre comprendre un capteur capable de mesurer la tension aux bornes du bobinage du rotor. Alternativement, la tension aux bornes du bobinage du rotor est récupérée dans l'ordinateur de bord du véhicule.

Le module de récupération peut comprendre un capteur de vitesse capable de mesurer la vitesse de rotation du rotor par rapport au stator. Alternativement, le module de récupération comprend un capteur de position capable de mesurer la position du rotor par rapport au stator et le dispositif de commande comprend un moyen pour calculer la dérivée de la position par rapport au temps.

Un tel dispositif de commande est notamment avantageux, en ce qu'il permet de commander la machine électrique synchrone à rotor bobiné en minimisant le nombre de capteurs fournissant des informations sur les grandeurs statoriques. Notamment l'invention permet de commander de manière robuste la machine synchrone à rotor bobiné avec uniquement un capteur de courant rotorique et un capteur de position. Il est à noter en effet que la connaissance du couple résistant du rotor permet de synthétiser des régulateurs plus performants en régime transitoire, et plus robustes vis-à-vis des perturbations.

Selon un autre aspect, un procédé de commande d'une machine électrique triphasée synchrone à rotor bobiné pour véhicule automobile électrique ou véhicule hybride électrique, comprend au moins une itération au cours de laquelle :

- on reçoit les tensions aux bornes des phases du stator et la tension aux bornes du bobinage du rotor, on mesure le courant traversant le bobinage du rotor, et on récupère la vitesse de rotation du rotor par rapport au stator,
- on recueille des valeurs de référence des intensités traversant les phases du stator dans un repère diphasé lié au rotor, et
- on détermine les intensités traversant les phases du stator dans un repère diphasé lié au rotor, l'intensité traversant le bobinage du rotor, la vitesse de rotation du rotor, et le couple résistant appliqué au rotor, par l'intermédiaire d'un modèle de comportement des paramètres de fonctionnement de la machine électrique synchrone à rotor bobiné combiné à l'utilisation d'un observateur d'état, en fonction notamment des valeurs de tension aux bornes des phases du stator, des valeurs de référence des intensités traversant les phases du stator dans le repère diphasé lié au rotor, de la tension aux bornes du bobinage du rotor, de l'intensité traversant le bobinage du rotor et de la vitesse de rotation du rotor par rapport au stator.

Dans un mode de mise en œuvre particulier, le procédé comprend au moins une itération au cours de laquelle :

- on mesure les tensions aux bornes des phases du stator dans un repère triphasé fixe lié au stator, la tension aux bornes et le courant traversant le bobinage du rotor, et la vitesse de rotation du rotor par rapport au stator,

- on détermine les tensions aux bornes des phases du stator dans un repère diphasé lié au rotor en fonction des mesures de tension dans le repère triphasé fixe,
- on recueille des valeurs de référence des intensités traversant les phases du stator dans un repère diphasé lié au rotor, et
- on détermine les intensités traversant les phases du stator dans un repère diphasé lié au rotor, l'intensité traversant le rotor, la vitesse de rotation du rotor, et le couple résistant appliqué au rotor, par l'intermédiaire d'un modèle de comportement des paramètres de fonctionnement de la machine électrique synchrone à rotor bobiné combiné à l'utilisation d'un observateur d'état, en fonction notamment des mesures de tension aux bornes des phases du stator dans le repère diphasé lié au rotor, des valeurs de référence des intensités traversant les phases du stator dans le repère diphasé lié au rotor, de la tension et de l'intensité traversant le rotor et de la vitesse de rotation du rotor par rapport au stator.

Avantageusement, on règle l'observateur par un algorithme de Kalman en version étendue discrète.

Selon un mode de mise en œuvre, on détermine en outre le couple résistant appliqué au rotor, par l'intermédiaire du modèle de comportement des paramètres de fonctionnement de la machine électrique combinée à l'utilisation d'un observateur d'état.

De préférence, les valeurs de référence des intensités traversant les phases du stator sont des valeurs estimées et mises à jour au cours de l'itération précédente des intensités traversant les phases du stator ou des valeurs initiales prédéfinies.

Pour le calcul de ces valeurs estimées et mises à jour des paramètres de fonctionnement, on définit, pour toute itération, un vecteur d'état comprenant comme composantes des estimations provisoires ou mises à jour des paramètres de fonctionnement de la machine électrique à ladite itération. On peut alors mettre en œuvre les étapes suivantes :

- au cours d'une phase de prédiction, on détermine un vecteur d'état provisoire à l'itération suivante et une matrice de covariance de l'erreur associée audit vecteur d'état provisoire à l'itération suivante, en fonction d'un vecteur d'état mis à jour à l'itération en cours, d'une matrice de covariance de l'erreur associée au vecteur d'état mis à jour à l'itération en cours, d'une matrice de covariance de l'incertitude du système à l'itération en cours,
- on détermine le gain de l'observateur à l'itération en cours en fonction de la matrice de covariance de l'erreur associée au vecteur d'état provisoire à l'itération suivante et d'une matrice de covariance de bruit de mesures à l'itération en cours, et
- on calcule le vecteur d'état mis à jour à l'itération suivante en fonction du gain de l'observateur à l'itération en cours et du vecteur d'état provisoire à l'itération suivante.

Dans un tel mode de mise en œuvre, les valeurs de la matrice de covariance de l'incertitude du système peuvent être constantes pour toutes les itérations.

Toujours dans ce mode de mise en œuvre, les valeurs de la matrice de covariance de bruit de mesures sont constantes pour toutes les itérations.

Dans un autre mode de mise en œuvre, on peut en outre mesurer les courants traversant les phases du stator dans un repère triphasé fixe lié au stator.

Dans cet autre mode de mise en œuvre, on peut exprimer les courants traversant les phases du stator dans un repère diphasé fixe lié au stator et on calcule la position du rotor à l'itération suivante en fonction d'un vecteur d'état mis à jour à l'itération suivante et des courants traversant les phases du stator dans le repère diphasé fixe.

D'autres buts, caractéristiques et avantages de l'invention apparaîtront à la lecture de la description suivante, donnée uniquement à titre d'exemple non limitatif et faite en référence aux dessins annexés sur lesquels :

- la figure 1 illustre les principaux éléments d'une MSRB dans un repère triphasé,
- la figure 2 illustre les principaux éléments d'une MSRB dans le repère de Park,
- la figure 3 représente schématiquement un dispositif de commande d'une MSRB telle que celle des figures 1 et 2, et
- la figure 4 illustre les principales étapes d'un procédé de commande selon l'invention.

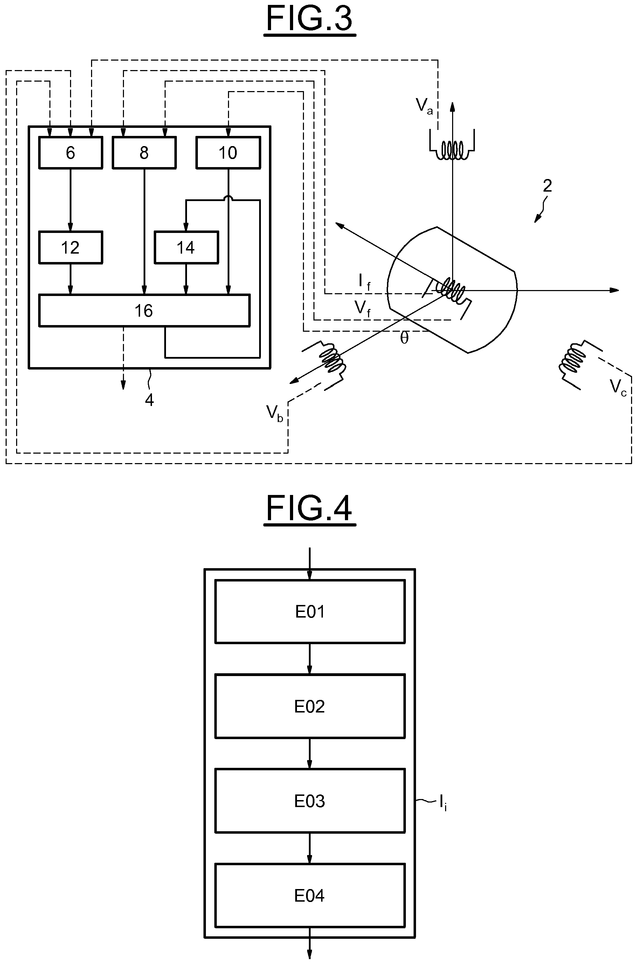

En référence à la figure 3, la MSRB 2 est contrôlée par un dispositif de commande 4. Le dispositif de commande 4 a pour fonction de déterminer les paramètres de fonctionnement de la MSRB 2.

À cet effet, le dispositif de commande 4 comprend un module de réception 6 doté de trois voltmètres respectivement aptes à mesurer les tensions $v_a$, $v_b$ et $v_c$ respectivement soumises aux bornes des phases a, b et c du stator de la MSRB 2, exprimées dans le repère triphasé lié au stator.

Le dispositif de commande 4 comprend un module de mesure 8 comprenant un ampèremètre et un voltmètre reliés au bobinage du rotor de la MSRB 2, de manière à pouvoir recueillir la tension $v_f$ soumise aux bornes du bobinage du rotor et l'intensité if traversant ce bobinage.

Un module de récupération 10 comprend un capteur mécanique, capable de mesurer la position θ du rotor par rapport au stator de la MSRB 2.

Le module de récupération 10 est en outre doté de moyens matériels et logiciels pour calculer la vitesse de rotation ω du rotor par rapport au stator de la MSRB 2, en calculant la dérivée de la position θ par rapport au temps.

Le dispositif de commande 4 comprend un calculateur 12 doté des moyens matériels et logiciels pour exprimer les tensions soumises aux bornes des phases du stator dans un repère diphasé lié au rotor, étant en l'espèce un repère de Park (d, q, 0). Le calculateur 12 recueille à cet effet les valeurs des tensions $v_a$, $v_b$ et $v_c$ mesurées par le module 6 et délivre en sortie les valeurs de tension $v_d$ et $v_q$. Le choix du repère de Park est ici judicieux car il est particulièrement adapté à la commande de machines électriques synchrones. Il en résulte une commande plus performante de la MSRB. Un module de mémorisation 14 comprend les moyens matériels et logiciels pour mémoriser des valeurs de référence d'intensité $i_{dref}$, $i_{qref}$, $i_{fref}$, de vitesse de rotation $\omega_{ref}$ et de couple résistant $C_{rref}$.

Un estimateur 16 recueille les valeurs de tension $v_d$ et $v_q$ calculées par le calculateur 12, les valeurs de tension $v_f$ et d'intensité $i_f$ mesurées par le module de mesure 8 et la valeur de vitesse de rotation ω mesurée par le module de récupération 10. L'estimateur 16 recueille par ailleurs les valeurs de référence $i_{dref}$, $i_{qref}$, $i_{fref}$, $\omega_{ref}$ et $C_{rref}$ stockées par le module 14. L'estimateur 16 comprend les moyens matériels et logiciels pour déterminer, en fonction des données mesurées et des données de référence, une estimation des valeurs à un instant t des paramètres de fonctionnement $i_d$, $i_q$, $i_f$, ω, $C_r$ de la MSRB 2.

L'estimateur 16 est par ailleurs relié au module 14 de telle sorte que, chaque fois qu'une estimation des paramètres de fonctionnement est mise en œuvre, les valeurs de référence sont actualisées comme suit :

$$i_d \rightarrow i_{dref},$$
$$i_q \rightarrow i_{qref},$$
$$i_f \rightarrow i_{fref},$$
$$\omega \rightarrow \omega_{ref} \text{ et}$$
$$C_r \rightarrow C_{rref}.$$

Pour déterminer les paramètres de fonctionnement en fonction des données mesurées et des données de référence, l'estimateur 16 met en œuvre un procédé fondé sur les équations suivantes.

Les données d'intensité et de tension des phases du stator de la MSRB 2 peuvent être exprimées dans un repère diphasé (α,β,0) lié au stator en réalisant les projections depuis le repère triphasé (a, b, c). La matrice de transformation correspondant à une telle projection est la suivante. On note que les composantes homopolaires ne sont pas prises en compte.

$$C_{32} = \begin{bmatrix} 1 & -1/2 & -1/2 \\ 0 & \sqrt{3}/2 & -\sqrt{3}/2 \end{bmatrix} \qquad (\mathrm{Eq.}\ 2)$$

Ces données peuvent ensuite être modélisées dans un repère diphasé lié au rotor, en l'espèce un repère de Park (d, q, 0). Pour ce faire, on réalise les projections des grandeurs depuis le repère diphasé lié au stator (α, β, 0) avec la matrice de transformation :

$$R(\theta) = \begin{bmatrix} Cos\,\theta & -Sin\,\theta \\ Sin\,\theta & Cos\,\theta \end{bmatrix} \qquad (\mathrm{Eq.}\ 3)$$

Les équations électriques de la MSRB dans le repère de Park (d, q, 0) s'écrivent sous la forme :

$$v_d = R_s i_d + L_d \frac{di_d}{dt} + M \frac{di_f}{dt} - \omega L_q i_q$$

$$v_q = R_s i_q + L_q \frac{di_q}{dt} + \omega \left( M.i_f + L_d i_d \right)$$

$$v_f = R_f i_f + L_f \frac{di_f}{dt} + M \frac{di_d}{dt}$$

$$(Eq. \ 4)$$

Les équations mécaniques s'écrivent :

$$J \frac{d\omega}{dt} = p \left( C_m - C_r \right)$$

$$C_m = 1.5 p \left[ \left( L_d - L_q \right) i_d + M i_f \right] i_q$$

$$(Eq. \ 5)$$

Dans les équations (Eq. 4) et (Eq. 5), les grandeurs sont définies de la manière suivante :

-   $v_d$ : la tension appliquée à la phase statorique sur l'axe direct du repère de Park (d), c'est-à-dire la tension aux bornes d'un enroulement diphasé équivalent aux enroulements triphasés, sur l'axe (d),
-   $v_q$ : la tension appliquée à la phase statorique sur l'axe quadratique du repère de Park (q),
-   $v_f$ : la tension rotorique,
-   $i_d$ : le courant circulant dans la phase statorique sur l'axe d,
-   $i_q$ : le courant circulant dans la phase statorique sur l'axe q,
-   $i_f$ : le courant rotorique
-   $R_s$ : la résistance statorique
-   $R_f$ : la résistance rotorique
-   $L_d$, $L_q$ et $L_f$ : les inductances respectives des phases d, q et f,
-   M : l'inductance mutuelle maximale entre une phase statorique et la phase rotorique,
-   

$$\omega = p * \Omega$$

-   p : le nombre de paires de pôles de la MSRB,
-   $\Omega$ : la vitesse de rotation du rotor,
-   J : l'inertie du rotor avec la charge,
-   $C_m$ : le couple moteur, et
-   $C_r$ : le couple résistant.

En supposant que le couple résistant varie très lentement par rapport à la dynamique des courants, on déduit des équations (Eq. 4) et (Eq. 5) le système d'équation suivant :

$$\frac{d}{dt}\begin{bmatrix} i_d \\ i_q \\ i_f \end{bmatrix} = \begin{bmatrix} L_d & 0 & M \\ 0 & L_q & 0 \\ M & 0 & L_f \end{bmatrix}^{-1} \times \left( \begin{bmatrix} v_d \\ v_q \\ v_f \end{bmatrix} - \begin{bmatrix} R_s & -\omega L_q & 0 \\ \omega L_d & R_s & \omega M \\ 0 & 0 & R_f \end{bmatrix} \begin{bmatrix} i_d \\ i_q \\ i_f \end{bmatrix} \right)$$

$$\frac{d\omega}{dt} = \frac{1}{J} \left( 1.5 p \left[ \left( L_d - L_q \right) i_d + M i_f \right] i_q - p C_r \right)$$

$$\frac{dC_r}{dt} = 0$$

$$(Eq. \ 6)$$

A partir des équations (Eq. 1) à (Eq. 6), l'estimateur 16 met en œuvre un procédé de contrôle de la MSRB 2, schématiquement représenté en figure 4. Au cours de ce procédé, le système d'équations (Eq. 6) est évalué par l'estimateur 16 par la méthode de l'observateur d'état.

On rappelle qu'un observateur d'état, en automatique et en théorie de l'information, est une extension d'un modèle représenté sous forme de représentation d'état. Lorsque l'état d'un système n'est pas mesurable, on conçoit un observateur qui permet de reconstruire l'état à partir d'un modèle du système dynamique et des mesures d'autres états.

On définit un système à observer de la façon suivante :

$$\begin{cases} \dfrac{d}{dt}x = f(x,u) \\ \quad y = h(x) \end{cases} \qquad (Eq.\ 7)$$

L'équation d'un observateur pour ce système s'écrit alors de la façon suivante :

$$\frac{d}{dt}\hat{x} = f(\hat{x},u) + K.\left[y - h(\hat{x})\right] \qquad (Eq.\ 8)$$

On applique maintenant la méthode de l'observateur d'état à la commande de la MSRB 2.

On définit le vecteur d'état x comme suit :

$$x = \begin{bmatrix} i_d \\ i_q \\ i_f \\ \omega \\ C_r \end{bmatrix} \qquad (Eq.9)$$

On définit l'entrée u de l'observateur comme suit :

$$u = \begin{bmatrix} v_d \\ v_q \\ v_f \end{bmatrix} \qquad (Eq.\ 10)$$

On définit la sortie y du système à observer comme suit :

$$y = \begin{bmatrix} i_f \\ \omega \end{bmatrix} \qquad (Eq.\ 11)$$

Le réglage de l'observateur se fait par le choix du gain K, qui multiplie le terme d'erreur. Dans ce mode de réalisation, l'observateur d'état est réglé par un algorithme de Kalman. L'algorithme de Kalman est une technique adaptative qui fait changer le gain d'observateur en ligne de façon à minimiser le moindre carré de l'erreur d'estimation. Par ailleurs, cet algorithme présente l'avantage d'être réglable à travers des matrices de covariance, de l'incertitude du système et des bruits de mesure. Cela permet à l'utilisateur de maitriser le rapport rapidité/précision de l'observateur en fonction de chaque machine. L'algorithme de Kalman est donc un moyen de réglage d'un observateur d'état adapté à des systèmes non linéaires, tels que les machines électriques triphasées.

On a représenté sur la figure 4 les quatre étapes constituant une itération du procédé de commande de la MSRB 2. Ce procédé a pour fonction de permettre une commande avancée de la MSRB 2 en connaissant et en actualisant régulièrement les valeurs connues des paramètres de fonctionnement de la MSRB 2. Ce procédé comprend une pluralité d'itérations, chaque itération consistant en une actualisation des valeurs des paramètres de fonctionnement de la MSRB 2.

Par la suite, quel que soit l'entier i, on désignera par $\hat{x}_{i+1/i}$ un vecteur d'état provisoire à l'itération $I_{i+1}$, c'est-à-dire un vecteur dont les composantes sont des estimations provisoires, faites lors de l'itération $I_i$, des paramètres de fonctionnement ($i_d$, $i_q$, $i_f$, $\omega$, $C_r$) de la MSRB 2. Pour un même entier i, le vecteur d'état provisoire à l'itération $I_{i+1}$ se distingue d'un vecteur d'état mis à jour $\hat{x}_{i+1/i+1}$ à l'itération $I_{i+1}$, dont les composantes sont des valeurs estimées et mises à jour des mêmes paramètres de fonctionnement à l'itération $I_{i+i}$. En d'autres termes, comme cela sera détaillé par la suite, au cours d'une itération $I_i$, le vecteur d'état provisoire $\hat{x}_{i+1/i}$ est une estimation a priori de l'état du système à l'itération suivante $I_{i+1}$, le vecteur d'état mis à jour correspondant à l'estimation a posteriori de l'état du système à l'itération suivante $I_{i+1}$.

En référence à la figure 4, une itération $I_i$ peut être initialisée dès lors qu'on connaît les valeurs d'entrée et les valeurs d'état. Les valeurs d'entrée sont les composantes du vecteur $u_i$ recueilli au début de l'itération en cours $I_i$. Les valeurs d'état sont les composantes du vecteur d'état mis à jour $\hat{x}_{i/i}$, caractérisant l'état du système à l'itération $I_i$, estimé au cours de l'itération précédente $I_{i-1}$. Si i=0, les valeurs d'état du vecteur $\hat{x}_{i/i}$ sont remplacées par les valeurs d'initialisation correspondantes.

Quel que soit i, une itération $I_i$ débute par une première étape E01 de linéarisation du système d'équations (Eq 7) par calcul des matrices jacobiennes :

$$A_i = \left. \frac{\partial f}{\partial x} \right|_{\hat{x}_{i/i}, u_i} \qquad (Eq.\ 12)$$

$$H_i = \left. \frac{\partial h}{\partial x} \right|_{\hat{x}_{i/i}} \qquad (Eq.\ 13)$$

Les matrices $A_i$ et $H_i$ sont respectivement les jacobiennes des fonctions f et h définies dans l'équation (Eq. 7), par rapport à x. La forme analytique de ces matrices est calculée par calcul symbolique et transcrite directement dans le procédé. Les valeurs des matrices $A_i$ et $H_i$ sont déterminés en fonction des valeurs d'état (courants, vitesse, position) au début de l'itération $I_i$.

Au cours d'une seconde étape E02 de prédiction a priori de l'état à l'itération $I_{i+1}$, on détermine un vecteur d'état provisoire $\hat{x}_{i+1/i}$ et une matrice de covariance de l'erreur associée $P_{i+1/i}$. Pour tout i≥1, le vecteur d'état provisoire $\hat{x}_{i+1/i}$ est une estimation a priori du vecteur d'état x à l'itération $I_{i+1}$, à partir du vecteur d'état mis à jour $\hat{x}_{i/i}$ et du vecteur d'entrée $u_i$. La matrice de covariance de l'erreur $P_{i+1/i}$ reflète l'erreur associée à cette estimation a priori. Le vecteur d'état provisoire et la matrice de covariance de l'erreur associée sont calculés comme suit :

$$\hat{x}_{i+1/i} = \hat{x}_{i/i} + T_S . f(\hat{x}_{i/i}, u_i)$$
$$P_{i+1/i} = P_{i/i} + T_S .(A_i \times P_i + P_i \times A_i^T) + Q_i \qquad (Eq.\ 14),$$

où $T_S$ représente la période d'échantillonnage, $\hat{x}_{i/i}$ est le vecteur d'état mis à jour à l'itération $I_i$, $P_{i/i}$ est la matrice de covariance de l'erreur associée au vecteur d'état mis à jour $\hat{x}_{i/i}$ et $Q_i$ est la matrice de covariance de l'incertitude du système à l'itération $I_i$.

La matrice de covariance de l'incertitude du système $Q_i$ rend compte de l'incertitude dans la définition du système, dû par exemple à l'apparition d'un bruit perturbant le système, à l'approximation de la modélisation du système ou à l'incertitude sur les valeurs employées dans la modélisation.

Une troisième étape E03 consiste à calculer le gain de l'observateur, en appliquant l'équation suivante :

$$K_i = P_{i+1/i} \times \left(H_i\right)^T \times \left[H_i \times P_{i+1/i} \times \left(H_i\right)^T + R_i\right]^{-1} \qquad (Eq.\ 15),$$

où $R_i$ est la matrice de covariance des bruits de mesures à l'itération $I_i$.

Enfin, au cours d'une quatrième étape E04, on réalise une phase de mise à jour a posteriori de l'état du système. Pour ce faire, on recueille le vecteur de sortie $y_i$ dont on utilise les composantes correspondant aux mesures du courant

$i_f$ traversant le bobinage et de la vitesse de rotation $\omega$ à la fin de l'itération $I_i$. La mise à jour est régie par l'équation suivante :

$$\hat{x}_{i+1/i+1} = \hat{x}_{i+1/i} + K_i \times \left[ y_i - h(\hat{x}_{i+1/i}) \right]$$
$$P_{i+1/i+1} = P_{i+1/i} + K_i \times H_i \times P_{i+1/i} \qquad \text{(Eq. 16).}$$

A l'issue de l'étape E04, on dispose d'une estimation corrigée de l'état du système, en fonction de l'estimation a priori mise en œuvre au cours de l'étape E02 et des dernières mesures contenues dans le vecteur de sortie $y_i$.

On note que ce sont ces valeurs d'état mises à jour ou, autrement dit, les composantes du vecteur d'état mis à jour $\hat{x}_{i+1/i+1}$ à l'itération $I_{i+1}$ qui vont être stockées puis utilisées comme valeurs de référence pour la mise en œuvre de la deuxième étape E02 de l'itération suivante $I_{i+1}$. Cette étape E04 de mise à jour permet une convergence plus rapide de l'estimation de l'état du système vers les valeurs réelles.

Ainsi, par ce procédé, en connaissant à la base les valeurs des paramètres de fonctionnement $v_d$, $v_q$, $v_f$ au début de l'itération $I_i$ (vecteur d'entrée $u_i$), en mémorisant les valeurs des paramètres de fonctionnement $i_d$, $i_q$, $i_f$, $\omega$, $C_r$ estimées au cours de l'itération précédente $L_{i-1}$ (vecteur d'état mis à jour $\hat{x}_{i/i}$ à l'itération $I_i$) et en mesurant les valeurs des paramètres de fonctionnement $i_f$ et $\omega$ à la fin de l'itération $I_i$ (sortie du système $y_i$), on estime de manière fiable et précise l'état du système à l'itération $I_{i+1}$. En d'autres termes, on parvient à estimer de manière fiable et précise les paramètres de fonctionnement $i_d$, $i_q$, $i_f$, $\omega$, $C_r$ à l'instant correspondant au début de l'itération $I_{i+1}$.

Pour une connaissance des paramètres de fonctionnement plus précise, on diminue la période d'échantillonnage $T_s$, ce qui revient à augmenter le nombre d'itérations par unité de temps. À chaque itération, on répète les quatre étapes E01 à E04 afin de disposer de valeurs d'état régulièrement mises à jour.

Le réglage de l'observateur se fait par le choix des matrices $Q_i$ et $R_i$. Ce choix dépend du système à observer, des paramètres du moteur et des bruits de mesure qui dépendent de l'environnement dans lequel fonctionne le moteur. Les règles générales de choix des matrices de covariance de l'incertitude et du bruit de mesures sont les suivantes :

- si on augmente les valeurs de la matrice de covariance de l'incertitude du système $Q_i$, on donne moins de confiance aux mesures, et la dynamique de l'observateur devient plus rapide, et
- si on augmente les valeurs de la matrice de covariance du bruit de mesures $R_i$, on donne plus de confiance aux mesures, ce qui augmente la précision en dépit de la rapidité.

Les valeurs de la matrice de covariance de l'incertitude Qi où de la matrice de covariance du bruit de mesures Ri peuvent être constantes, quel que soit i. En d'autres termes, les matrices de covariance restent les mêmes à chaque itération. Toutefois, on peut envisager sans sortir du cadre de l'invention une alternative dans laquelle les matrices Qi et Ri voient leurs valeurs modifiées d'une itération à la suivante.

Ainsi, par ce procédé, le dispositif de commande de la MSRB 2 représenté en figure 3 peut déterminer, en fonction de valeurs des tensions $v_d$, $v_q$, $v_f$, de l'intensité $i_f$ et de la vitesse $\omega$, calculer les valeurs des intensités $i_d$, $i_q$, du couple $C_r$ et calculer des valeurs filtrées de l'intensité $i_f$ et de la vitesse $\omega$. Dans le mode de réalisation représenté en figure 3, les tensions vd et vq sont déterminées par calcul à partir des tensions mesurées $v_a$, $v_b$, $v_c$ et de la position $\theta$ ; la tension $v_f$ et l'intensité $i_f$ sont mesurées ; et la vitesse $\omega$ est calculée par dérivation de la position $\theta$ par rapport au temps. Ce mode de réalisation est particulièrement avantageux, en ce qu'il dispense d'incorporer des capteurs d'intensité pour mesurer les intensités traversant les phases du stator. L'invention permet par ailleurs d'estimer le couple résistant $C_r$ appliqué à l'arbre moteur de la MSRB, ce qui permet un contrôle plus robuste, et ce sans qu'il soit nécessaire d'implémenter un capteur mécanique supplémentaire.

On peut sans sortir du cadre de l'invention envisager de déterminer les valeurs $v_d$, $v_q$, $v_f$, $I_f$ et $\omega$ de manière alternative.

Selon une première alternative, les tensions peuvent être directement extraites du signal de consigne fourni à la MSRB 2 et émis par l'ordinateur de bord du véhicule, les valeurs $i_f$ et $\theta$ étant mesurées. On peut pour ce faire soit extraire les valeurs de tension $v_a$, $v_b$, $v_c$ et $v_f$, puis calculer $v_d$ et $v_q$ au moyen du calculateur 12, soit extraire directement les tensions $v_d$, $v_q$ et vf dans le repère de Park. Une telle alternative est particulièrement avantageuse en ce qu'elle permet de piloter la MSRB avec deux capteurs seulement, un capteur d'intensité et un capteur de position.

Selon une deuxième alternative, on mesure la valeur de vitesse $\omega$ au lieu de la position $\theta$. Le dispositif de commande est par ailleurs apte à mesurer les courants statoriques $i_\alpha$ et $i_\beta$ dans un repère diphasé fixe. À cette fin, le dispositif de commande peut comprendre trois ampèremètres chacun branché sur une phase a, b et c du stator de la MSRB 2. Les trois valeurs d'intensité relevées par les trois ampèremètres sont transformées par application de l'équation (Eq. 2). On peut alors, selon cette alternative, estimer la position du rotor d'après la formule suivante :

$$\hat{\theta} = \operatorname{atan}\left(\frac{i_\beta \hat{i_d} - i_\alpha \hat{i_q}}{i_\alpha \hat{i_d} + i_\beta \hat{i_q}}\right) \qquad (Eq.\ 17)$$

Ainsi, dans cette deuxième alternative, on pourra utiliser un capteur de vitesse de rotation, moins coûteux, au lieu d'un capteur de position pour déterminer la position θ du rotor par rapport au stator.

Ainsi, ce procédé et le dispositif de commande qui permet de le mettre en œuvre sont notamment avantageux, en ce qu'il devient facultatif d'utiliser des capteurs électriques ou mécaniques pour connaître les paramètres de fonctionnement $i_d$, $i_q$ et $C_r$. L'invention ne nécessite pour fonctionner que deux capteurs, l'un servant à mesurer le courant traversant le bobinage du rotor et l'autre servant à mesurer la vitesse de rotation du rotor.

Si on souhaite minimiser le nombre de capteurs, on n'utilise que ces deux capteurs. On diminue ainsi le coût de production du véhicule sans conséquence au niveau de la performance de la commande de la MSRB. Si on ne souhaite pas supprimer les capteurs, on augmente la fiabilité et la rapidité de la commande. En particulier, la MSRB reste contrôlable en cas de panne de l'un des capteurs.

Dans les deux cas, la fiabilité de la commande de la MSRB est améliorée tout en limitant la complexité, le coût de revient et l'encombrement du dispositif de commande.

## Revendications

1. Dispositif de commande (4) d'une machine électrique triphasée synchrone à rotor bobiné (2) pour véhicule automobile électrique ou véhicule hybride électrique, comprenant un module de réception (6) des tensions ($v_a$, $v_b$, $v_c$, $v_f$) aux bornes des phases du stator et du bobinage du rotor, un module de mesure (8) du courant ($i_f$) traversant le bobinage du rotor, un module de récupération (10) de la vitesse de rotation ($\omega$) du rotor par rapport au stator et un estimateur du comportement des paramètres de fonctionnement de la machine électrique synchrone à rotor bobiné (16), **caractérisé en ce que** l'estimateur est combiné à l'utilisation d'un observateur d'état, le dispositif (4) comprenant des moyens (14) pour recueillir des valeurs de référence des intensités ($i_{dref}$, $i_{qref}$) traversant les phases du stator dans un repère diphasé lié au rotor (d, q), ledit estimateur (16) étant apte à estimer les intensités traversant les phases du stator ($i_d$, $i_q$) dans le repère diphasé lié au rotor (d, q) et le couple résistant (Cr) appliqué au rotor, en fonction des grandeurs ($v_a$, $v_b$, $v_c$, $v_f$, $i_f$, $\omega$) déterminées par les modules de réception, de mesure et de récupération (6, 8, 10) et de valeurs de référence ($i_{dref}$, $i_{qref}$) des intensités traversant les phases du stator dans un repère diphasé lié au rotor.

2. Procédé de commande d'une machine électrique triphasée synchrone à rotor bobiné (2) pour véhicule automobile électrique ou véhicule hybride électrique, comprenant au moins une itération ($I_i$) au cours de laquelle :

   - on reçoit les tensions ($v_a$, $v_b$, $v_c$, $v_f$) aux bornes des phases du stator et la tension aux bornes du bobinage du rotor, on mesure le courant ($i_f$) traversant le bobinage du rotor, et on récupère la vitesse de rotation ($\omega$) du rotor par rapport au stator,

   **caractérisé en ce que** l'on recueille des valeurs de référence ($i_{dref}$, $i_{qref}$) des intensités traversant les phases du stator dans un repère diphasé lié au rotor (d, q), et
   on détermine les intensités ($i_d$, $i_q$) traversant les phases du stator dans un repère diphasé lié au rotor (d, q), et le couple résistant ($C_r$) appliqué au rotor, par l'intermédiaire d'un modèle de comportement des paramètres de fonctionnement de la machine électrique synchrone à rotor bobiné combiné à l'utilisation d'un observateur d'état, en fonction notamment des valeurs de tension ($V_d$, $v_q$) aux bornes des phases du stator, des valeurs de référence des intensités ($i_{dref}$, $i_{qref}$) traversant les phases du stator dans le repère diphasé lié au rotor (d, q), de la tension aux bornes du bobinage du rotor et de l'intensité ($i_f$) traversant le bobinage du rotor et de la vitesse de rotation ($\omega$) du rotor par rapport au stator.

3. Procédé selon la revendication 2, dans lequel on règle l'observateur par un algorithme de Kalman en version étendue discrète.

4. Procédé selon l'une quelconque des revendications 2 à 3, dans lequel les valeurs de référence des intensités ($i_{dref}$, $i_{qref}$) traversant les phases du stator sont des valeurs estimées et mises à jour au cours de l'itération précédente des intensités traversant les phases du stator ou des valeurs initiales prédéfinies.

**5.** Procédé selon l'une quelconque des revendications 2 à 4, dans lequel on met en œuvre les étapes suivantes, un vecteur d'état comprenant comme composantes des estimations provisoires ou mises à jour des paramètres de fonctionnement de la machine électrique à une itération donnée :

au cours d'une phase de prédiction, on détermine un vecteur d'état provisoire ($\hat{x}_{i+1/i}$) à l'itération suivante ($I_{i+1}$) et une matrice de covariance de l'erreur ($P_{i+1/i}$) associée audit vecteur d'état provisoire ($\hat{x}_{i+1/i}$) à l'itération suivante ($I_{i+1}$), en fonction d'un vecteur d'état mis à jour ($\hat{x}_{i/i}$) à l'itération en cours ($I_i$), d'une matrice de covariance de l'erreur ($P_{i/i}$) associée au vecteur d'état mis à jour ($\hat{x}_{i/i}$) à l'itération en cours ($I_i$), d'une matrice de covariance de l'incertitude ($Q_i$) du système à l'itération en cours ($I_i$),

on détermine le gain ($K_i$) de l'observateur à l'itération en cours ($I_i$) en fonction de la matrice de covariance de l'erreur ($P_{i+1/i}$) associée au vecteur d'état provisoire ($\hat{x}_{i+1/i}$) à l'itération suivante ($I_{i+1}$) et d'une matrice de covariance de bruit de mesures ($R_i$) à l'itération en cours ($I_i$),

et on calcule le vecteur d'état mis à jour ($\hat{x}_{i+1/i+1}$) à l'itération suivante ($I_{i+1}$) en fonction du gain ($K_i$) de l'observateur à l'itération en cours ($I_i$) et du vecteur d'état provisoire ($\hat{x}_{i+1/i}$) à l'itération suivante ($I_{i+1}$).

**6.** Procédé selon la revendication 5, dans lequel les valeurs de la matrice de covariance de l'incertitude ($Q_i$) du système sont constantes pour toutes les itérations ($I_i$).

**7.** Procédé selon la revendication 5 ou 6, dans lequel les valeurs de la matrice de covariance de bruit de mesures ($R_i$) sont constantes pour toutes les itérations ($I_i$).

**8.** Procédé selon l'une quelconque des revendications 2 à 7, dans lequel on mesure en outre les courants ($i_a$, $i_b$, $i_c$) traversant les phases du stator dans un repère triphasé fixe lié au stator (a, b, c).

**9.** Procédé selon la revendication 8, dans lequel on exprime les courants ($i_\alpha$, $i_\beta$) traversant les phases du stator dans un repère diphasé fixe lié au stator ($\alpha$, $\beta$) et on calcule la position ($\theta$) du rotor à l'itération suivante ($I_{i+1}$) en fonction d'un vecteur d'état mis à jour ($\hat{x}_{i+1/i+1}$) à l'itération suivante ($I_{i+1}$) et des courants d'alimentation des phases du stator ($i_\alpha$, $i_\beta$) dans le repère diphasé fixe ($\alpha$, $\beta$).

**Patentansprüche**

**1.** Vorrichtung zur Steuerung (4) einer elektrischen Dreiphasen-Synchronmaschine mit gewickeltem Rotor (2) für ein Elektrokraftfahrzeug oder Hybridelektrofahrzeug, welche ein Modul zum Empfang (6) der Spannungen ($v_a$, $v_b$, $v_c$, $v_f$) an den Anschlüssen der Phasen des Stators und der Wicklung des Rotors, ein Modul zur Messung (8) des Stroms ($i_f$), der durch die Wicklung des Rotors fließt, ein Modul zur Gewinnung (10) der Drehzahl ($\omega$) des Rotors in Bezug auf den Stator und einen Schätzer des Verhaltens der Betriebsparameter der elektrischen Synchronmaschine mit gewickeltem Rotor (16) umfasst, **dadurch gekennzeichnet, dass** der Schätzer mit der Verwendung eines Beobachters kombiniert ist, wobei die Vorrichtung (4) Mittel (14) zum Gewinnen von Referenzwerten der Stromstärken ($i_{dref}$, $i_{qref}$), welche die Phasen des Stators in einem mit dem Rotor verbundenen zweiphasigen Koordinatensystem (d, q) durchfließen, umfasst, wobei der Schätzer (16) geeignet ist, die Stromstärken ($i_d$, $i_q$), welche die Phasen des Stators in dem mit dem Rotor verbundenen zweiphasigen Koordinatensystem (d, q) durchfließen, und das auf den Rotor ausgeübte Widerstandsmoment (Cr) in Abhängigkeit von den Größen ($v_a$, $v_b$, $v_c$, $v_f$, $i_f$, $\omega$), die von den Modulen zum Empfang, zur Messung und zur Gewinnung (6, 8, 10) bestimmt wurden, und von Referenzwerten ($i_{dref}$, $i_{qref}$) der Stromstärken, welche die Phasen des Stators in einem mit dem Rotor verbundenen zweiphasigen Koordinatensystem durchfließen, zu schätzen.

**2.** Verfahren zur Steuerung einer elektrischen Dreiphasen-Synchronmaschine mit gewickeltem Rotor (2) für ein Elektrokraftfahrzeug oder Hybridelektrofahrzeug, welches wenigstens eine Iteration ($I_i$) umfasst, in welcher:

- die Spannungen ($v_a$, $v_b$, $v_c$, $v_f$) an den Anschlüssen der Phasen des Stators und die Spannung an den Anschlüssen der Wicklung des Rotors empfangen werden, der durch die Wicklung des Rotors fließende Strom ($i_f$) gemessen wird und die Drehzahl ($\omega$) des Rotors in Bezug auf den Stator gewonnen wird,

**dadurch gekennzeichnet, dass** Referenzwerte ($i_{dref}$, $i_{qref}$) der Stromstärken gewonnen werden, welche die Phasen des Stators in einem mit dem Rotor verbundenen zweiphasigen Koordinatensystem (d, q) durchfließen, und die Stromstärken ($i_d$, $i_q$) bestimmt werden, welche die Phasen des Stators in einem mit dem Rotor verbundenen zweiphasigen Koordinatensystem (d, q) durchfließen, und

das auf den Rotor ausgeübte Widerstandsmoment ($C_r$) über ein Modell des Verhaltens der Betriebsparameter der elektrischen Synchronmaschine mit gewickeltem Rotor, das mit der Verwendung eines Beobachters kombiniert ist, bestimmt wird, in Abhängigkeit insbesondere von den Spannungswerten ($v_d$, $v_q$) an den Anschlüssen der Phasen des Stators, von den Referenzwerten der Stromstärken ($i_{dref}$, $i_{qref}$), welche die Phasen des Stators in dem mit dem Rotor verbundenen zweiphasigen Koordinatensystem (d, q) durchfließen, von der Spannung an den Anschlüssen der Wicklung des Rotors und von der Stromstärke ($i_f$), welche die Wicklung des Rotors durchfließt, und von der Drehzahl ($\omega$) des Rotors in Bezug auf den Stator.

3. Verfahren nach Anspruch 2, wobei der Beobachter durch einen Kalman-Algorithmus in einer diskreten erweiterten Variante geregelt wird.

4. Verfahren nach einem der Ansprüche 2 bis 3, wobei die Referenzwerte der Stromstärken ($i_{dref}$, $i_{qref}$), welche die Phasen des Stators durchfließen, während der vorhergehenden Iteration geschätzte und aktualisierte Werte der Stromstärken, welche die Phasen des Stators durchfließen, oder vordefinierte Anfangswerte sind.

5. Verfahren nach einem der Ansprüche 2 bis 4, wobei die folgenden Schritte ausgeführt werden, wobei ein Zustandsvektor als Komponenten vorläufige oder aktualisierte Schätzungen der Betriebsparameter der elektrischen Maschine in einer gegebenen Iteration umfasst:

während einer Vorhersagephase werden ein vorläufiger Zustandsvektor ($\hat{x}_{i+1/i}$) in der folgenden Iteration ($I_{i+1}$) und eine Kovarianzmatrix des Fehlers ($P_{i+1/i}$), die dem vorläufigen Zustandsvektor ($\hat{x}_{i+1/i}$) in der folgenden Iteration ($I_{i+1}$) zugeordnet ist, in Abhängigkeit von einem aktualisierten Zustandsvektor ($\hat{x}_{i/i}$) in der laufenden Iteration ($I_i$), von einer Kovarianzmatrix des Fehlers ($P_{i/i}$), die dem aktualisierten Zustandsvektor ($\hat{x}_{i/i}$) in der laufenden Iteration ($I_i$) zugeordnet ist, und von einer Kovarianzmatrix der Unsicherheit ($Q_i$) des Systems in der laufenden Iteration ($I_i$) bestimmt,
es wird der Verstärkungsfaktor ($K_i$) des Beobachters in der laufenden Iteration ($I_i$) in Abhängigkeit von der Kovarianzmatrix des Fehlers ($P_{i+1/i}$), die dem vorläufigen Zustandsvektor ($\hat{x}_{i+1/i}$) in der folgenden Iteration ($I_{i+1}$) zugeordnet ist, und von einer Kovarianzmatrix des Messrauschens ($R_i$) in der laufenden Iteration ($I_i$) bestimmt, und es wird der aktualisierte Zustandsvektor ($\hat{x}_{i+1/i+1}$) in der folgenden Iteration ($I_{i+1}$) in Abhängigkeit vom Verstärkungsfaktor ($K_i$) des Beobachters in der laufenden Iteration ($I_i$) und vom vorläufigen Zustandsvektor ($\hat{x}_{i+1/i}$) in der folgenden Iteration ($I_{i+1}$) berechnet.

6. Verfahren nach Anspruch 5, wobei die Werte der Kovarianzmatrix der Unsicherheit ($Q_i$) des Systems für alle Iterationen ($I_i$) Konstanten sind.

7. Verfahren nach Anspruch 5 oder 6, wobei die Werte der Kovarianzmatrix des Messrauschens ($R_i$) für alle Iterationen ($I_i$) Konstanten sind.

8. Verfahren nach einem der Ansprüche 2 bis 7, wobei außerdem die Ströme ($i_a$, $i_b$, $i_c$) gemessen werden, welche die Phasen des Stators in einem mit dem Stator verbundenen festen dreiphasigen Koordinatensystem (a, b, c) durchfließen.

9. Verfahren nach Anspruch 8, wobei die Ströme ($i_\alpha$, $i_\beta$) ausgedrückt werden, welche die Phasen des Stators in einem mit dem Stator verbundenen festen zweiphasigen Koordinatensystem ($\alpha$, $\beta$) durchfließen, und die Position ($\theta$) des Rotors in der folgenden Iteration ($I_{i+1}$) in Abhängigkeit von einem aktualisierte Zustandsvektor ($\hat{x}_{i+1/i+1}$) in der folgenden Iteration ($I_{i+1}$) und von den Speiseströmen der Phasen des Stators ($i_\alpha$, $i_\beta$) in dem festen zweiphasigen Koordinatensystem ($\alpha$, $\beta$) berechnet wird.

**Claims**

1. Device (4) for controlling a synchronous three-phase electric machine with a wound rotor (2) for an electric or hybrid electric motor vehicle, comprising a module (6) for receiving the voltages ($v_a$, $v_b$, $v_c$, $v_f$) across the terminals of the phases of the stator and of the rotor winding, a module (8) for measuring the current ($i_f$) flowing through the rotor winding, a module (10) for retrieving the speed of rotation ($\omega$) of the rotor relative to the stator and an estimator (16) of the behaviour of the operating parameters of the wound-rotor synchronous electric machine, **characterized in that** the estimator is combined with the use of a state observer, the device (4) comprising means (14) for collecting reference values of the intensities ($i_{dref}$, $i_{qref}$) flowing through the phases of the stator in a two-phase reference frame linked to the rotor (d, q), said estimator (16) being capable of estimating the intensities flowing through the phases of the stator ($i_d$, $i_q$) in the two-phase reference frame linked to the rotor (d, q) and the resistive torque ($C_r$) applied to the rotor, according to the quantities ($v_a$, $v_b$, $v_c$, $v_f$, $i_f$, $\omega$) determined by the receiving, measuring and retrieving modules (6, 8, 10) and to reference values ($i_{dref}$, $i_{qref}$) of the intensities flowing through the phases of the stator in a two-phase reference frame linked to the rotor.

2. Method for controlling a synchronous three-phase electric machine with a wound rotor (2) for an electric or hybrid electric motor vehicle, comprising at least one iteration ($I_i$) in which:

- the voltages ($v_a$, $v_b$, $v_c$, $v_f$) across the terminals of the phases of the stator and the voltage across the terminals of the rotor winding are received, the current ($i_f$) flowing through the rotor winding is measured, and the speed of rotation ($\omega$) of the rotor relative to the stator is retrieved,

**characterized in that** reference values ($i_{dref}$, $i_{qref}$) of the intensities flowing through the phases of the stator are collected in a two-phase reference frame linked to the rotor (d, q), and
the intensities ($i_d$, $i_q$) flowing through the phases of the stator are determined in a two-phase reference frame linked to the rotor (d, q), and the resistive torque ($C_r$) applied to the rotor, via a model of the behaviour of the operating parameters of the wound-rotor synchronous electric machine combined with the use of a state observer, in particular according to the voltage values ($v_d$, $v_q$) across the terminals of the phases of the stator, to reference values of the intensities ($i_{dref}$, $i_{qref}$) flowing through the phases of the stator in the two-phase reference frame linked to the rotor (d, q), to the voltage across the terminals of the rotor winding and to the intensity ($i_f$) flowing through the rotor winding and to the speed of rotation ($\omega$) of the rotor relative to the stator.

3. Method according to Claim 2, wherein the observer is adjusted by a discrete extended version of a Kalman algorithm.

4. Method according to either of Claims 2 and 3, wherein the reference values of the intensities ($i_{dref}$, $i_{qref}$) flowing through the phases of the stator are values of the intensities flowing through the phases of the stator estimated and updated in the preceding iteration or predefined initial values.

5. Method according to any one of Claims 2 to 4, wherein the following steps are implemented, a state vector comprising, as components, provisional or updated estimates of the operating parameters of the electric machine at a given iteration:

in a prediction phase, a provisional state vector ($\hat{x}_{i+1/i}$) at the next iteration ($I_{i+1}$) and an error covariance matrix ($P_{i+1/i}$) associated with said provisional state vector ($\hat{x}_{i+1}/i$) at the next iteration ($I_{i+1}$) are determined according to an updated state vector ($\hat{x}_{i/i}$) at the current iteration ($I_i$), to an error covariance matrix ($P_{i/i}$) associated with the updated state vector ($\hat{x}_{i/i}$) at the current iteration ($I_i$), to an uncertainty covariance matrix ($Q_i$) of the system at the current iteration ($I_i$),
the gain ($K_i$) of the observer at the current iteration ($I_i$) is determined according to the error covariance matrix ($P_{i+1/i}$) associated with the provisional state vector ($x^\wedge_{i+1}/i$) at the next iteration ($I_{i+1}$) and to a measurement noise covariance matrix ($R_i$) at the current iteration ($I_i$) , and
the updated state vector ($x^\wedge_{i+1}/i+1$) at the next iteration ($I_{i+1}$) is calculated according to the gain ($K_i$) of the observer at the current iteration ($I_i$) and to the provisional state vector ($x^\wedge_{i+1}/i$) at the next iteration ($I_{i+1}$).

6. Method according to Claim 5, wherein the values of the uncertainty covariance matrix ($Q_i$) of the system are constant for all iterations ($I_i$).

7. Method according to Claim 5 or 6, wherein the values of the measurement noise covariance matrix ($R_i$) are constant for all iterations ($I_i$).

8. Method according to any one of Claims 2 to 7, wherein, additionally, the currents ($i_a$, $i_b$, $i_c$) flowing through the phases of the stator are measured in a fixed three-phase reference frame linked to the stator (a, b, c).

9. Method according to Claim 8, wherein the currents ($i_\alpha$, $i_\beta$) flowing through the phases of the stator are expressed in a fixed two-phase reference frame linked to the stator ($\alpha$, $\beta$) and the position ($\theta$) of the rotor at the next iteration ($I_{i+1}$) is calculated according to an updated state vector ($x^\wedge_{i+1}/i+1$) at the next iteration ($I_{i+1}$) and to currents supplying the phases of the stator ($i_\alpha$, $i_\beta$) in the fixed two-phase reference frame ($\alpha$, $\beta$).

# FIG.1

# FIG.2

## FIG.3

## FIG.4

**RÉFÉRENCES CITÉES DANS LA DESCRIPTION**

**Documents brevets cités dans la description**

- US 20030094917 A
- EP 2099125 A
- US 20050007044 A
- US 20060125439 A